# EUROPEAN PATENT SPECIFICATION

(11) **EP 1 930 187 B1**
(45) Date of publication and mention of the grant of the patent: **17.02.2010**
(21) Application number: 06821807.2
(22) Date of filing: 27.09.2006
(51) Int. Cl.: B60C 19/00, B60C 23/00, B60C 23/04

(54) **TIRE STATE ESTIMATION DEVICE AND TIRE**
VORRICHTUNG ZUR EINSCHÄTZUNG DES REIFENZUSTANDS UND REIFEN
DISPOSITIF D'ESTIMATION DE CONDITION DE PNEU ET PNEU

(30) Priority: 30.09.2005 JP 2005287178
(43) Date of publication of application: 11.06.2008
(73) Proprietor: TOYOTA JIDOSHA KABUSHIKI KAISHA, Toyota-shi, Aichi 471-8571 (JP)
(72) Inventor: MURAKAMI, Hideki, Toyota-shi, Aichi 471-8571 (JP); OSUMI, Ryota, Toyota-shi, Aichi 471-8571 (JP)
(74) Representative: Winter, Brandl, Fürniss, Hübner Röss, Kaiser, Polte Partnerschaft Patent- und Rechtsanwaltskanzlei
(86) International application number: PCT/JP2006/319150
(87) International publication number: WO 2007/040115

(56) References cited:
- WO-A-03/082644
- JP-A- 09 188 113
- JP-A- 2002 087 032
- JP-A- 2002 511 812
- JP-A- 2003 320 827
- JP-A- 2003 526 560
- JP-A- 2004 359 203
- JP-A- 2005 205 956
- JP-A- 2005 528 270
- US-B1- 6 539 295

## Description

### TECHNICAL FIELD

The present invention relates to a tire state estimation system and a tire, and, in particular, to an improvement in transmission of information obtained from a tire.

### BACKGROUND ART

As a method of achieving safe running of a vehicle, technology of detecting a contact state between a tire and a road surface, i.e., a ground contact state of the tire, and carrying out torque control, braking control, steering control or such according to the ground contact state, has been put into practical use.

For example, a patent document 1 discloses a vehicle state monitoring system of detecting a ground contact state of a tire, for example, a ground contact length of the tire, and also, estimating a shape of a ground contact surface of the tire or force produced in the tire, based on information obtained from a plurality of sensors provided in a tire tread.
Patent Document 1: Japanese Laid-Open Patent Application 2004-359203

WO 03/082644 discloses a method and a system for monitoring a tyre during the running of a vehicle. Said method comprises the steps of acquiring and storing, at least temporarily, a first curve representing the acceleration profile of a first point of the tread area of said tyre, located on a meridian plane of said tyre; acquiring and storing, at least temporarily, at least a second curve representing the acceleration profile of a second point of the tread area of said tyre, located substantially on said meridian plane; comparing said first and second curves, or parameters derived thereof; determining the behaviour of said tyre from said comparison.

### DISCLOSURE OF THE INVENTION

### PROBLEM TO BE SOLVED BY THE INVENTION

In order to obtain a ground contact state of a tire satisfactorily, it is necessary to measure force applied to the tire at a plurality of points of the tire.

Further, when a ground contact state of the tire is obtained based on applied force to be obtained, it has been preferable to dispose a plurality of sensors also in a circumferential direction of the tire, in order to improve accuracy of the estimation. Thus, in order to estimate a ground contact state of a tire satisfactorily, a plurality of sensors are disposed within the tire. Further, signal wires are drawn from the respective sensors particularly, and are laid within the tire. Therefore, wiring within the tire may become complicated, and also, work of laying the wires may become troublesome.

The present invention has been devised in consideration of such circumstances, and an object of the present invention is to provide a tire state estimation system and a tire used therein, by which, wiring from sensors within the tire can be made simpler, while estimation of a ground contact state of a tire, equivalent to the prior art, can be achieved.

### MEANS TO SOLVE THE PROBLEM

In order to solve the problem, the present invention includes a plurality of applied force sensors, disposed in a circumferential direction of a tire, for detecting applied force produced according to a ground contact state of the tire; a signal transmitting means configured to connect the plurality of applied force sensors in series, and to transmit detection signals from the applied force sensors in a time-series manner; a signal identifying means configured to identify the detection signals from the applied force sensors transmitted in the time-series manner as those of the respective applied force sensors, based on a rotation speed of the tire and a disposing interval in the circumferential direction of the applied force sensors; and an estimating means configured to estimate the ground contact state of the tire, based on the detection signals thus identified for the respective applied force sensors.

As the applied force sensors, distortion sensors which detect distortion produced when the tire comes into contact with the ground, acceleration sensors which detect impact applied to the tire when the tire comes into contact with the ground, or such, for example, may be used. The detection signals transmitted in the time-series manner by the signal transmitting means are, for example, sent to the side of a vehicle, then the signal identifying means identifies the detection signals for the respective applied force sensors, and the detection signals may be used for estimation of a ground contact state, as detection signals in the prior art which are transmitted separately. It is noted that the signal identifying means may be provided on the side of the tire, and, the detection signals may be identified thereby for the respective applied force sensors before they are transmitted to the side of the vehicle, which detection signals may be then transmitted as separate detection signals to the side of the vehicle.

In this configuration, the plurality of applied force sensors disposed within the tire are connected in series by the signal transmitting means. Thereby, it is possible to simplify wiring and layout thereof within the tire for obtaining necessary detection signals for estimation of a ground contact state of the tire. Further, the detection signals thus transmitted in the time-series manner are identified by the signal identifying means as the detection signals of the respective applied force sensors. As a result, the estimating means can immediately carry out estimation of a ground contact state of the tire.

In the above-mentioned configuration, the plurality of applied force sensors disposed in the circumferential direction of the tire may be disposed in such a manner that they are disposed at different positions in a width direction of the tire when they are disposed in the circumferential direction. In this configuration, the detection signals transmitted in the time-series manner are the detection signals which are detected at positions different in the circumferential direction and also in the width direction of the tire. At this time, when the vehicle runs at a medium or high speed for example, even when the applied force sensors are disposed at positions different in the circumferential direction of the tire, a difference in detection timing is very small, and the respective applied force sensors can be regarded as detecting applied force of the tire at positions different in the which direction at substantially the same timing. Then when the signal identifying means identifies the detection signals as the detection signals of the respective applied force sensors, the respective detection signals thus identified can be regarded as the detection signals which are detected at substantially the same timing at the respective positions in the width direction of the tire. As a result, it is possible to regard as obtaining ground contact lengths at a plurality of positions in the width direction of the tire at the same timing. Then, based on the ground contact lengths thus obtained, it is possible to estimate a ground contact state of the tire, such as a ground contact surface shape of the tire, transverse force applied to the tire, a camber angle and so forth, for example.

Further, in the above-mentioned configuration, the plurality of applied force sensors disposed in the circumferential direction of the tire may be disposed in such a manner that they are disposed at least in an inside circumferential direction and in an outside circumferential direction with respect to the width direction of the tire, and the signal transmitting means may form at least a first signal transmission line and a second signal transmission line, for connecting alternately with respect to the circumferential direction the applied force sensors disposed inside and the applied force sensors disposed outside. In this configuration, when both the first signal transmission line and the second signal transmission line transmit the detection signals, it is possible to obtain a series of the detection signals for the inside circumferential direction and a series of the detection signals for the outside circumferential direction as a result of changing combinations of the detection signals identified by the signal identifying means, for example. As a result, it is possible to obtain the successive detection signals of the applied force sensors disposed in the inside circumferential direction and the successive detection signals of the applied force sensors disposed in the outside circumferential direction. As a result, it is possible to obtain ground contact lengths in the width direction of the tire for a plurality of timings, and thus, it is possible to carry out estimation of the ground contact state of the tire with high accuracy. Further, when any one of the first signal transmission line and the second signal transmission line has a breakage or a transmission error, whereby transmission of the detection signals is made not possible, the detection signals transmitted in the time-series manner by the signal transmitting means become the detection signals detected at positions different in the circumferential direction and in the width direction of the tire. At this time, when the vehicle runs at a medium or high speed for example, even when the applied force sensors are disposed at positions different in the circumferential direction of the tire, a difference in detection timing is very small, and the respective applied force sensors can be regarded as detecting applied force of the tire at positions different in the width direction at substantially the same timing. Then when the signal identifying means identifies the detection signals as the detection signals of the respective applied force sensors, the respective detection signals thus identified can be regarded as the detection signals which are detected at substantially the same timing at the respective positions in the width direction of the tire. As a result, it is possible to regard as obtaining ground contact lengths at a plurality of positions in the width direction of the tire at the same timing. Then, based on the ground contact lengths thus obtained, it is possible to estimate a ground contact state of the tire. That is, it is possible to easily achieve a fail-safe system against the breakage or the transmission error.

Further, in the above-mentioned configuration, the first signal transmission line and the second signal transmission line may connect the applied force sensors disposed between the applied force sensors disposed inside and the applied force sensors disposed outside. In this configuration, the number of the applied force sensors disposed between the applied force sensors disposed inside and the applied force sensors disposed outside may be one or more than one. In this configuration, it is possible to improve a detection resolution in the width direction of the tire, and thus, high accuracy in estimation of a ground contact state of the tire can be easily obtained.

Further, in the above-mentioned configuration, the plurality of applied force sensors connected in series by the signal transmitting means may be disposed at an interval in the circumferential direction of the tire equal to or larger than a standard ground contact length of the tire. The standard ground contact length of the tire may be, for example, a ground contact length of the tire when a tire pressure alarming device operates. That is, this is a ground contact length indicating a state in which the tire can be stably used. In this configuration, it is possible to prevent the plurality of the applied force sensors from outputting the detection signals at the same timing even when the ground contact length of the tire increases in a state in which the tire is used normally. As a result, it is possible to positively carry out identification of the signals for the respective applied force sensors.

In order to solve the above-mentioned problem, the present invention includes a plurality of applied force sensors, disposed in a circumferential direction of a tire, for detecting applied force produced according to a ground contact state of the tire; and a signal transmitting means configured to connect the plurality of applied force sensors in series, and to transmit detection signals from the applied force sensors in a time-series manner.

In this configuration, since the plurality of applied force sensors disposed within the tire are connected in series, it is possible to simplify wiring and layout thereof of the applied force sensors within the tire. Further, it is possible to contribute to reduction in the manufacturing cost as a result of simplification of the wiring and layout thereof.

Further, in the above-mentioned configuration, the plurality of applied force sensors disposed in the circumferential direction of the tire may be disposed in such a manner that they are disposed at different positions in a width direction of the tire when they are disposed in the circumferential direction. In this configuration, the detection signals of the applied force sensors disposed in the circumferential direction and in the width direction of the tire can be transmitted in a time-series manner.

Further, in the above-mentioned configuration, the plurality of applied force sensors disposed in the circumferential direction of the tire may be disposed in such a manner that they are disposed at least in an inside circumferential direction and in an outside circumferential circuit with respect to the width direction of the tire, and the signal transmitting means forms at least a first signal transmission line and a second signal transmission line, for connecting alternately with respect to the circumferential direction the applied force sensors disposed inside and the applied force sensors disposed outside. In this configuration, when both the first signal transmission line and the second signal transmission line transmit the detection signals, it is possible to obtain a series of the detection signals in the inside circumferential direction and a series of the detection signals in the outside circumferential direction as a result of changing combinations of the detection signals identified by the signal identifying means, for example. As a result, it is possible to obtain the successive detection signals from the applied force sensors disposed in the inside circumferential direction and the successive detection signals from the applied force sensors disposed in the outside circumferential direction. Further, when any one of the first signal transmission line and the second signal transmission line has a breakage or a transmission error, whereby transmission of the detection signals is made not possible, the detection signals transmitted in the time-series manner by the signal transmitting means become the detection signals detected at positions different in the circumferential direction and in the width direction of the tire. At this time, when the vehicle runs at a medium or high speed for example, even when the applied force sensors are disposed at positions different in the circumferential direction of the tire, a difference in detection timing is very small, and the respective applied force sensors can be regarded as detecting applied force of the tire at positions different in the which direction at substantially the same timing. Then when the signal identifying means identifies the detection signals as the detection signals of the respective applied force sensors, the respective detection signals thus identified can be regarded as the detection signals which are detected at substantially the same timing at the respective positions in the width direction of the tire. As a result, it is possible to regard as obtaining ground contact lengths at a plurality of positions in the width direction of the tire at the same timing. Then, based on the ground contact lengths thus obtained, it is possible to estimate a ground contact state of the tire. That is, it is possible to easily achieve a fail-safe system against the breakage or the transmission error.

Further, in the above-mentioned configuration, the first signal transmission line and the second signal transmission line may connect the applied force sensors disposed between the applied force sensors disposed inside and the applied force sensors disposed outside. In this configuration, the number of the applied force sensors disposed between the applied force sensors disposed inside and the applied force sensors disposed outside may be one or more than one. In this configuration, it is possible to improve a detection resolution in the width direction of the tire, and thus, high accuracy in estimation of a ground contact state of the tire can be easily obtained.

Further, in the above-mentioned configuration, the plurality of applied force sensors connected in series by the signal transmitting means may be disposed at an interval in the circumferential direction of the tire equal to or larger than a standard ground contact length of the tire. In this configuration, it is possible to prevent the plurality of the applied force sensors from outputting the detection signals at the same timing even when the ground contact length of the tire increases in a state in which the tire is used normally. As a result, identification of the detection signals can be made easier and the processing can be made quickly.

### ADVANTAGEOUS EFFECTS OF THE INVENTION

With the use of the tire state estimation system and the tire according to the present invention, it is possible to simplify wiring and layout within the tire. Further, as a result, it is possible to improve reliability of the tire state estimation system and/or to reduce the cost thereof.

### BRIEF DESCRIPTION OF THE DRAWINGS

FIG. 1 shows a conceptual diagram of a configuration of a vehicle in which a tire state estimation system and tires in a present invention present embodiment are mounted.
FIG. 2 illustrates one example of an arrangement and wiring of applied force sensors in the tire in the present embodiment.
FIG. 3 shows a block diagram illustrating a configuration of a tire state estimating part in the present embodiment.
FIG. 4 illustrates a configuration of detection signals transmitted from applied force sensors connected in series in the present embodiment and a configuration after separating processing is carried out.
FIG. 5 illustrates a shape of ground contact surface of the tire based on a ground contact length estimated in the present embodiment.
FIG. 6 illustrates another example of an arrangement and wiring of applied force sensors in a tire in the present embodiment.
FIG. 7 illustrates a configuration of detection signals transmitted from applied force sensors shown in FIG. 6 and a configuration after separating processing is carried out.
FIG. 8 illustrates an application of an arrangement and wiring of applied force sensors shown in FIG. 6.

### DESCRIPTION OF THE REFERENCE NUMERALS

- 10: TIRE STATE ESTIMATION SYSTEM
- 12: VEHICLE
- 14: TIRE
- 14a: WHEEL
- 16, 16a, 16b, 16c: APPLIED FORCE SENSORS
- 18: TRANSMITTING PART
- 20: IN-VEHICLE CONTROL PART
- 22: WHEEL SPEED SENSOR
- 24: SIGNAL TRANSMISSION LINE
- 26: RECEIVING PART
- 28: TIRE STATE ESTIMATING PART
- 30: WHEEL SPEED OBTAINING PART
- 32: SEPARATING PERIOD CALCULATING PART
- 34: SIGNAL IDENTIFYING PART
- 26: ESTIMATING PART

### BEST MODE FOR CARRYING OUT THE INVENTION

Below, a present embodiment of the present invention (referred to as a present embodiment hereinafter) will be described based on figures.

A tire used in a tire state estimating system in the present embodiment has a plurality of applied force sensors within the tire for detecting applied force produced according to a ground contact state of the tire. The respective applied force sensors are connected in series by a signal transmitting means. Then, the signal transmitting means transmits detection signals of the applied force sensors in a time-series manner. The tire state estimation system separates the detection signals transmitted in the time-series manner into the detection signals of the respective applied force sensors by means of a signal identifying means. Then, an estimating part estimates the ground contact state of the tire based on the detection signals thus identified for the respective applied force sensors. Thus, within the tire, the plurality of applied force sensors are connected in series by the signal transmitting means, and thus, wiring of the respective applied force sensors is made simple, and layout thereof is easy.

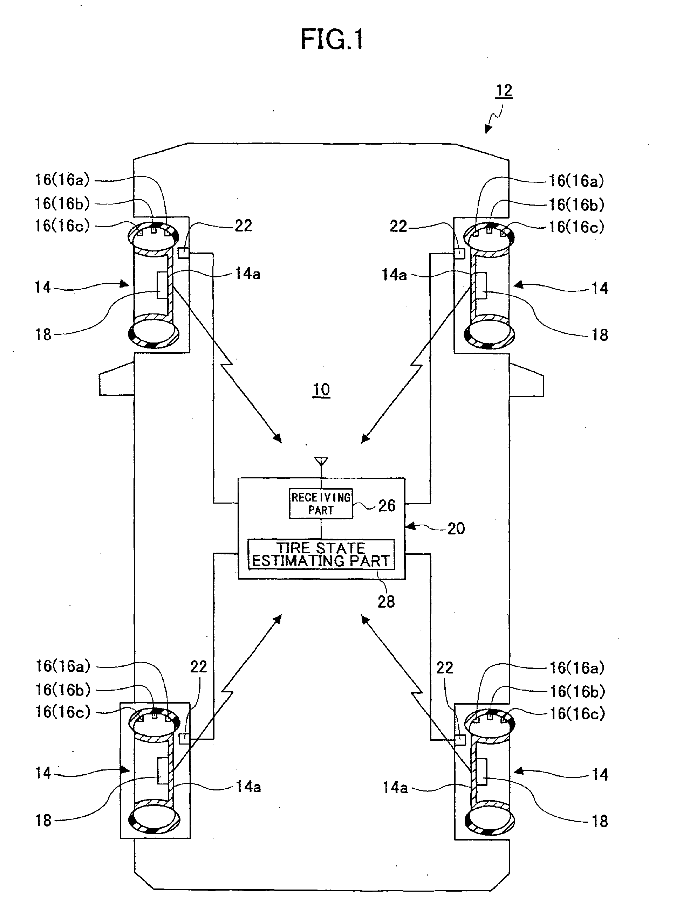

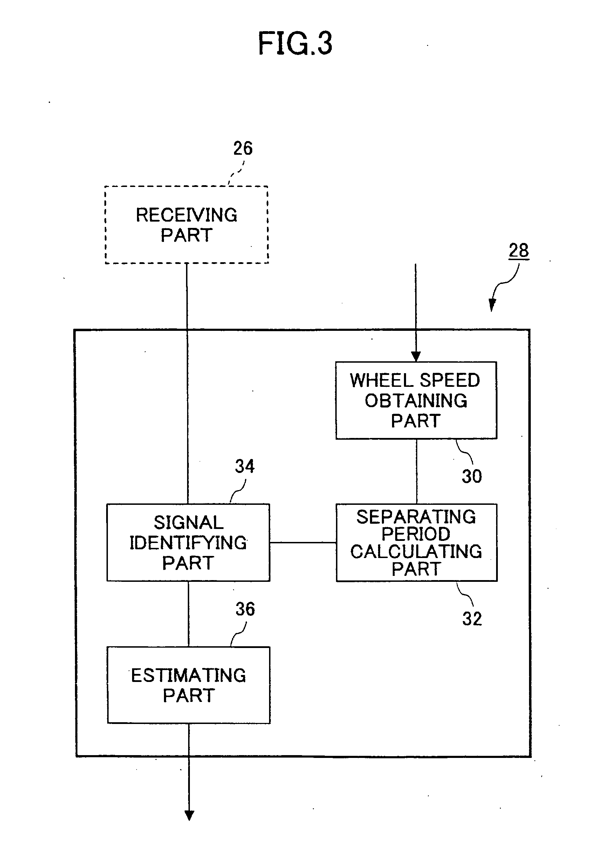

FIG. 1 shows a conceptual diagram of a configuration of a vehicle 12 in which the tire state estimation system 10 in the present embodiment is mounted. The vehicle 12 has tires 14 mounted at front wheel positions and at rear wheel positions. The plurality of applied force sensors 16 (in a case of FIG. 1, 3 pieces are shown for each tire) are disposed within each tire 14, for example, in an inner surface of a tire tread. The applied force sensors 16 are detecting sensors for detecting applied force produced according to a ground contact state of the tire. For example, the applied force sensors 16 may be distortion sensors which detect distortion in a radial direction of the tire 14, or acceleration sensors which detect acceleration in the radial direction of the tire. A position and a configuration of wiring of each applied force sensor 16 will be described later. The detection signals obtained from the applied force sensors 16 are transmitted to a transmitting part 18 fixed to a wheel 14a or such of the tire 14, and then, is transmitted to an in-vehicle control part 20 mounted in the vehicle 12, by a wireless means for example. Further, at a part at which the wheel 12 is fixed at a position facing the tire 14, a wheel speed sensor 22 for detecting a wheel speed is disposed. The wheel speed sensor 22 is a rotation sensor of an electromagnetic pickup type or of a hole IC type, detects rotation of each particular tire 14, and provides the information to the in-vehicle control part 20.

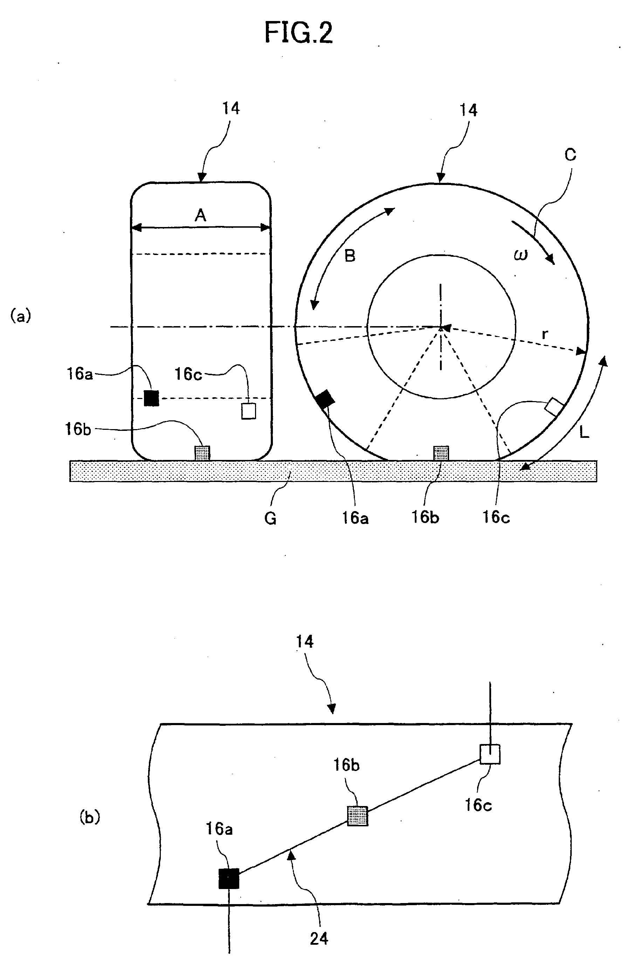

FIG. 2 (a) shows an arrangement of the applied force sensors 16 disposed within the tire 14. Further, FIG. 2 (b) shows wiring from each applied force sensor 16. FIG. 2 (a) is a front perspective view viewed from the front, and a side perspective view viewed from the side. It is noted that the arrangement and wiring of the applied force sensors 16 in each tire 14 is identical, and thus, description will be made for the front-right tire 14 as an example. As shown, the applied force sensors 16 (16a, 16b, 16c) in the present embodiment are disposed at positions different in a width direction A of the tire 14, and also, are disposed in a circumferential direction B. It is noted that, in the case of FIG. 2 (a), the applied force sensor 16a corresponds to one of an inside circumferential direction, and the applied force sensor 16c corresponds to one of an outside circumferential direction. Further, it is noted that the tire 14 rotates in a direction C upon forward running. Accordingly, upon forward running of the vehicle 12, the applied force sensors 16a, 16b and 16c come into contact with a road surface in the stated order, and detect applied force according to ground contact states. Further, a disposing interval L of the respective applied force sensors 16a, 16b and 16c is set in a length larger than a standard ground contact length L0. The standard ground contact length L0 of the tire 14 is, for example, a ground contact length when a tire pressure alarming device operates. Thus, the standard ground contact length is a ground contact length which indicates a state in which the tire 14 can be stably used. Normally, the tire is used in an air pressure state such that a tire pressure is higher than that in which the tire pressure alarming device operates. As a result, even when applied force such transverse force is applied to the tire 14, whereby the ground contact length changes, the ground contact length does not become larger than the standard ground contact length L0. Accordingly, by setting the disposing interval of the applied force sensors 16 larger than the standard ground contact length L0, it is possible to prevent a plurality of the applied force sensors 16 from outputting the detection signals simultaneously when the tire 14 comes into contact with the ground at certain timing. Further, as shown in FIG. 2 (a), the applied force sensors 16a, 16b and 16c may be disposed in a region which is approximately half in the circumferential direction of the tire 14 (region of approximately 180°). In this case, an interval between output of the detection signal from the applied force sensor 16c and output of the detection signal from the applied force sensor 16a is made longer, and an interval between the applied sensors 16a through 16b and an interval between the applied force sensors 16b through 16c is made shorter. As a result, the detection signal output after the long interval can be easily identified as the detection signal from the applied force sensor 16a. Further, when the disposing intervals are changed, with the disposing intervals of the applied force sensors 16 being kept longer than the stranded ground contact length L0, it is possible to identify which applied force sensor 16 the detection signal is obtained from, based on intervals of the detection signals from the respective applied force sensors 16 and actual disposing intervals of the applied force sensors 16. It is noted that identification information may be attached to the detection signal of each applied force sensor 16.

As shown in FIG. 2 (b), the respective applied force sensors 16a, 16b, 16c are connected in series by a single signal transmission line 24. Accordingly, when the tire 14 rotates in the forward running direction (in the direction of the arrow C in FIG. 2 (b)), the applied force sensor 16a, the applied force sensor 16b and the applied force sensor 16c come into contact with the ground in the stated order, and transmit detection signals of applied force in the order of the corresponding applied force sensors coming into contact with the ground, in a time-series manner.

Returning to FIG. 1, the in-vehicle control part 20 includes a receiving part 26 receiving the detection signals transmitted from the transmitting part 18 of the tire 14, and a tire state estimating part 28. The receiving part 26 receives the detection signals from the transmitting part 18, and provides them to the tire state estimating part 28 in sequence. FIG. 3 shows details of an inside configuration of the tire state estimating part 28. The tire state estimating part 28 includes a wheel speed obtaining part 30, a separating period calculating part 32, a signal identifying part 34 and an estimating part 36. The wheel speed obtaining part 30 obtains a wheel speed V provided by the wheel speed sensor 22, and provides it to the separating period calculating part 32. It is noted that the wheel speed obtaining part 30 may obtain an angular speed ω of the tire 14 separately, calculate a rotation speed (circumferential speed) V = r × ω with the use of a radius r of the wheel 14, and provide it to the separating period calculating part 32. The separating period calculating part 32 calculates a signal separating period T = L/V for separating and identifying the detection signals of the applied force sensors 16 provided in a successive and in a time-series manner from the receiving part 26, based on the wheel speed (the rotation speed of the tire 14) V and the disposing interval L of the applied force sensors 16. This is because, output intervals of the detection signals of the applied force sensors 16a, 16b, and 16c disposed at the fixed intervals upon ground contact may change according to the rotation speed of the tire 14. The thus-calculated signal separating period T is provided to the signal identifying part 34, which then separates and identifies the detection signals of the applied force sensors 16a, 16b, 16c provided in a successive and time-series form, based on the signal identifying period T, and thus, obtains the detection signals of the respective applied force sensors 16a, 16b and 16c. The thus-separated detection signals of the respective applied force sensors 16a, 16b, and 16c are provided to the estimating part 36. Then, for example, a ground contact length of the tire 14 associated with the applied force sensor 16a, a ground contact length of the tire 14 associated with the disposing position of the applied force sensor 16a, a ground contact length of the tire 14 associated with the disposing position of the applied force sensor 16b and a ground contact length of the tire 14 associated with the disposing position of the applied force sensor 16c, are calculated, respectively. As shown in FIG. 2 (a), (b), the applied force sensors 16a, 16b, 16c are different in position in the width direction of the tire 14, and thus, it is possible to obtain a plurality of ground contact lengths in the width direction of the tire 14.

When the vehicle 12 runs at a medium or high speed, for example, at 40 km/h, the rotation speed V of the tire 14 is V = 11 m/s. Further, assuming that the disposing interval L of the applied force sensors 16 is L = 0.4 m, a difference between detection timings of the respective applied force sensors 16a, 16b and 16c becomes approximately 0.036 s, and thus, it is possible to regard as detecting applied force in the tire 14 at positions different in the width direction substantially at the same timing. When the applied force sensors 16a, 16b, 16c are distortion sensors, a change in distortion detected as applied force indicates a timing of 'landing on' of the tire 14 coming into contact with a road surface and a timing of 'taking off' of the tire 14 being apart from the road surface. An interval between 'landing on' and 'taking off' corresponds to a time of ground contact, and a ground contact length can be calculated from the vehicle speed. A ground contact length on at least one of the inside circumferential side and the outside circumferential side is obtained, a ground contact state of the tire 14, i.e., for example, an amount of camber angle, an amount of transverse force, an amount of slip angle, and so forth, can be estimated by a well-know method. Therefore, the estimating part 36 provides the thus-estimated ground contact state to respective control units as control information.

Operation of the tire 14 and the tire state estimation system 10 configured above, will now be described. During running of the vehicle 12, detection signals concerning ground contact of the tire 14 detected by the applied force sensors 16 built in to the tire 14 are provided to the tire state estimating part 28 of the in-vehicle control part 20 through the transmitting part 18 and the receiving part 25.

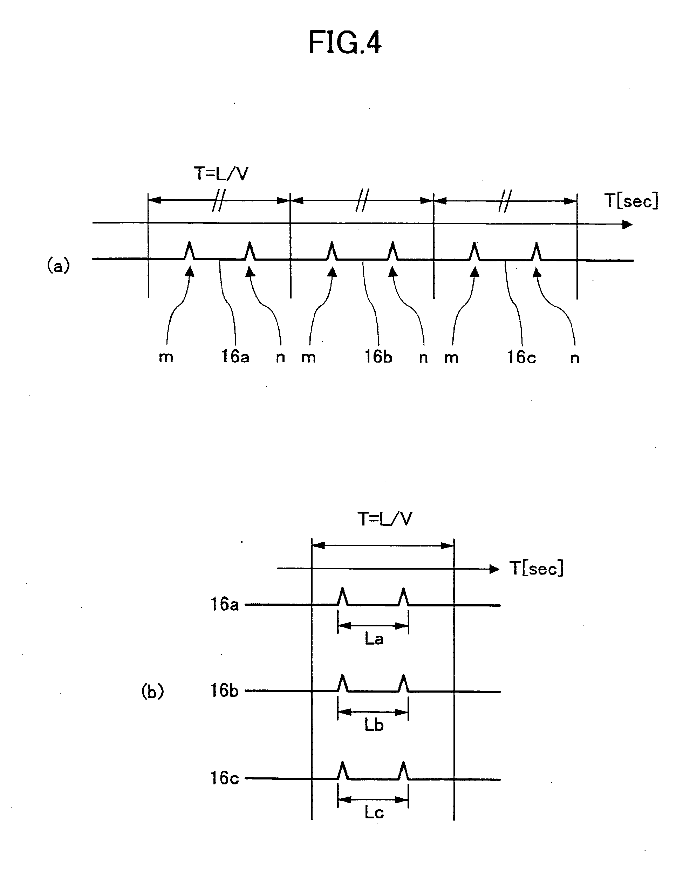

FIG. 4 (a) shows one example of detection signals of the applied force sensors 16a, 16b and 16c provided in a successive and time-series form from the receiving part 26. When the tire 14 rotates and comes into contact with the ground, i.e., upon 'landing on', distortion is produced since the tire 14 is kicked back by the road surface. For example, when a tire part at which the applied force sensor 16a is disposed lands on the road surface, a landing on signal m is detected. After that, the ground contact state continues, and then, when the tire part at which the applied force sensor 16a takes off from the road surface, distortion is produced since a part having deformed upon the ground contact is restored when the tire part thus takes off. As a result, the taking off signal n is detected. After that, in the same manner, landing on signals m and taking off signals n are detected when a tire part at which the applied force sensor 16b is disposed and a tire part at which the applied force sensor 16c is disposed land on and take off. It is noted that, for the purpose of explanation, the detection signals including the lauding on signals m and the taking off signals n are simplified in FIG. 4 (a).

As described above, when the vehicle 12 runs at 40 km/h and the disposing interval of the applied force sensors 16 is 0.4 m, the landing on signals m and the taking off signals n are output at intervals of approximately 0.036 s. Accordingly, the respective applied force sensors 16 can be regarded as detecting the landing on signals m and the taking off signals n at positions different in the width direction substantially at the same timing.

Accordingly, the signal identifying part 34 separates the detection signals of the applied force sensors 16a, 16b, 16c provided by the receiving part 26 successively and in a time-series manner, based on the signal separating period T provided by the separating period calculating part 32, and re-arranges them in parallel along the width direction A of the tire 14. As a result, a state shown in FIG. 4 (b) is obtained. This can be regarded as indicating ground contact lengths La, Lb and Lc in the width direction of the tire 14 at certain timing.

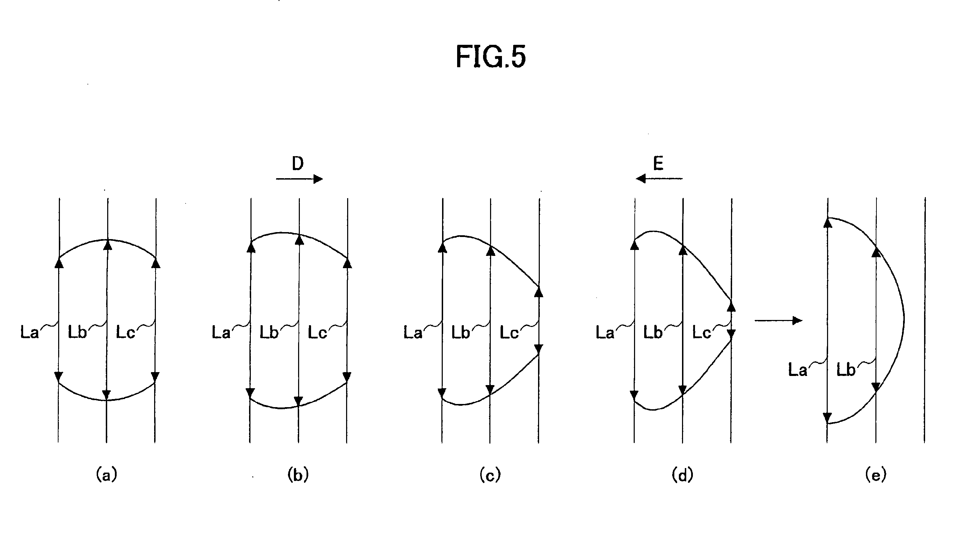

When the ground contact lengths La, Lb and Lc in the width direction of the tire 14 at the certain timing can be thus obtained, it is possible to estimate a ground contact surface shape of the tire as shown in FIG. 5. In FIG. 5 (a), the ground contact length La on the inside circumferential side of the tire 14 and the ground contact length Lc on the outside circumferential side are substantially the same length. This case indicates that the tire 14 stands upright with respect to the road surface, no transverse force is produced, and a camber angle does not increase. FIG. 5 (b), (c) shows a change in the ground contact lengths occurring when a steering wheel is controlled to the right, and transverse force in a direction D in the figure is produced. When the steering wheel is controlled in the D direction (to the right), the left ground contact length of the tire 14, i.e., the ground contact length La on the inside circumferential side increases, and the right ground contact length of the tire 14, i.e., the ground contact length Lc on the outside circumferential side reduces. FIG. 5 (c) shows a state in which the transverse force further increases. In this state, the ground contact length La increases more and the ground contact length Lc reduces more. The estimating part 36 may previously obtain a changing pattern of a ground contact length or an amount of a ground contact length obtained when transverse force is produced through an experiment or such, and hold them in a form of a map or such as comparison information. Then, the ground contact length estimated by the estimating part 36 is compared therewith, and thus, the estimating part 36 can estimate an amount of transverse force actually applied to the tire 14 in the same way as a well-known way of estimation of transverse force from a ground contact length. Further, the estimating part 36 can also estimate an attitude of the tire 14.

FIG. 5 (d), (e) shows a state in which the tire 14 is inclined in a direction E in the figure and thus a camber angle is increased. When the camber angle is produced in the tire 14, the left ground contact length, i.e., the ground contact length La on the inside circumferential side increases, and the right ground contact length of the tire 14, i.e., the ground contact length Lc on the outside circumferential side reduces. FIG. 5 (e) shows a state in which the camber angle further increases. In this state, the ground contact length La increases more and the ground contact length Lc reduces more. As a result, the tire 14 may be apart from the road surface. That is, when the camber angle increases, a ground contact width of the tire reduces. It is possible to identify between a case where transverse force of the tire 14 increases and a case where a camber angle changes, by using a difference in a ground contact surface shape. Also for a change in a camber angle, the estimating part 36 may previously obtain a changing pattern of a ground contact length or an amount of a ground contact length obtained when a camber angle changes through an experiment or such, and hold them in a form of a map or such as comparison information. Then, the ground contact length estimated by the estimating part 36 is compared therewith, and thus, the estimating part 36 can estimate an amount of a camber angle actually applied to the tire 14 in the same way as a well-known way of estimation of a camber angle from a ground contact length. Further, the estimating part 36 can also estimate an attitude of the tire 14. It is noted that, in order to obtain a ground contact surface shape such as that shown in FIG. 5, it is possible to dispose a plurality of applied force sensors 16 in the width direction of the tire 14. However, a sufficient ground contact surface shape can be obtained from detection of the ground contact lengths La, Lb and Lc in the present embodiment, and thus, estimation of a state of the tire 14 can be carried out. Further, as a minimum configuration, a state of the tire 14 can be estimated from detection of the ground contact lengths La and Lc.

Thus, in the tire 14, the plurality of applied force sensors 16 are disposed in the circumferential direction with being different in the width direction of the tire 14, and are connected in series. Thereby, it is possible to simplify wiring of the applied force sensors 16 and layout of the wiring. Further, as a result of separating the detection signals transmitted from the applied force sensors 16 connected in series in a time-series manner for the respective ones of the particular applied force sensors 16, it is possible to carry out estimation of a state of the tire 14 in the same manner as the prior art in which detection signals obtained from applied force sensors 16 connected in parallel are used.

It is noted that the arrangement of the applied force sensors 16 shown in FIG. 2 (a) is merely an example. For example, it also possible to dispose three other applied force sensors 16 in a half region of the tire 14 in which no applied force sensors 16 are disposed yet, in the same arrangement as that of the applied force sensors 16a, 16b and 16c shown in FIG. 2 (a), (b). In this case, the six applied force sensors 16 are connected in series. Then, six detection signals provided to the signal identifying part 34 successive in a time-series manner are separated based on the signal separating period T provided by the separating period calculating part 32. The thus-separated detection signals of respective applied force sensors 16 are the successive detection signals of the inside circumferential side, the center and the outside circumferential side of the tire 14, and configure a group of ground contact lengths in the width direction of the tire 14 of certain timing. Then, next detection signals of the inside circumferential side, the center and the outside circumferential side of the tire 14 configure a group of ground contact lengths in the width direction of the tire 14 of next timing. That is, it is possible to estimate the twice of ground contact states within a single turn of the tire 14, and thus, it is possible to improve the estimation accuracy. It is noted that, as described above, in order to identify the detection signals transmitted in the time-series manner, it is preferable that an interval between the applied force sensor 16a and the applied force sensor 16c is set narrower or wider than the other intervals. The applied force sensors 16 connected in series may be provided freely as long as a disposing interval in the circumferential direction is set longer than the standard ground contact length L0. It is possible to increase the number of detection positions, and thereby, it is possible to contribute to improvement in the estimation accuracy.

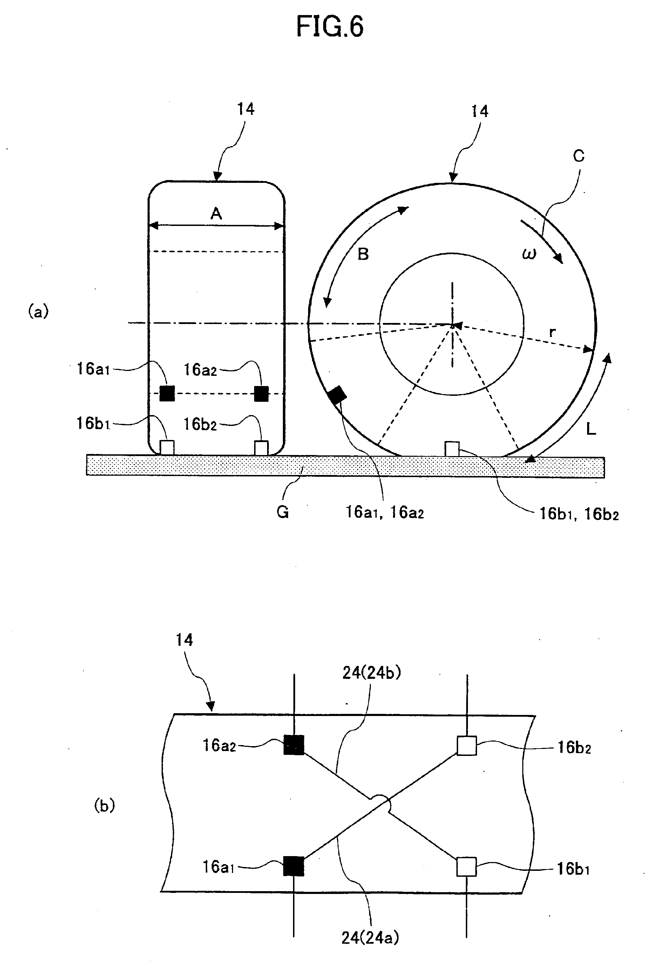

FIG. 6 illustrates another arrangement and wiring configuration of the applied force sensors 16 in the tire 14. In the example of FIG. 6, the same as the example of FIG. 2, a plurality of the applied force sensors 16 are disposed in the circumferential direction of the tire 14, and also, with respect to the width direction of the tire, the applied force sensors 16 are disposed at least on an inside circumferential direction and on an outside circumferential direction. Further, the signal transmission lines 24 as the signal transmitting means form at least a first signal transmission line 24a and a second signal transmission line 24b which connect the applied force sensors 16 disposed inside and the applied force sensors 16 disposed outside, alternatively with respect to the circumferential direction.

FIG. 6 (a) shows an arrangement of the applied force sensors 16 disposed within the tire 14. FIG. 6 (b) shows wiring from the respective applied force sensors 16. FIG. 6 (a) shows a front perspective view viewed from the front and a side perspective view viewed from the side. It is noted that the arrangement and wiring of the applied force sensors 16 in each tire 14 is identical, and thus, as a typical example, the front-right tire 14 will be described. In the example of FIG. 6 (a), the same as the example of FIG. 2, the plurality of applied force sensors 16 are disposed in the circumferential direction B of the tire 14, and also, are disposed at least in the inside circumferential direction and in the outside circumferential direction with respect to the width direction B of the tire 14. In the case of FIG. 6 (a), the applied force sensors 16a₁, 16b₁ are disposed on the inside circumferential side and the applied force sensors 16a₂ 16b₂ are disposed on the outside circumferential side. Further, the tire 14 rotates in an arrow C upon forward running. Accordingly, upon forward running of the vehicle, the applied force sensor 16a₁, the applied force sensor 16a₂, the applied force sensor 16b₁ and the applied force sensor 16b₂ come into contact with a road surface in the stated order, and detect applied force corresponding to ground contact states. Further, a disposing interval L in the circumferential direction B of the respective applied force sensors 16 is set larger than the standard ground contact length L0, and thus, a plurality of the applied force sensors 16 in the circumferential direction connected by the same signal transmission line can be prevented from outputting detection signals simultaneously.

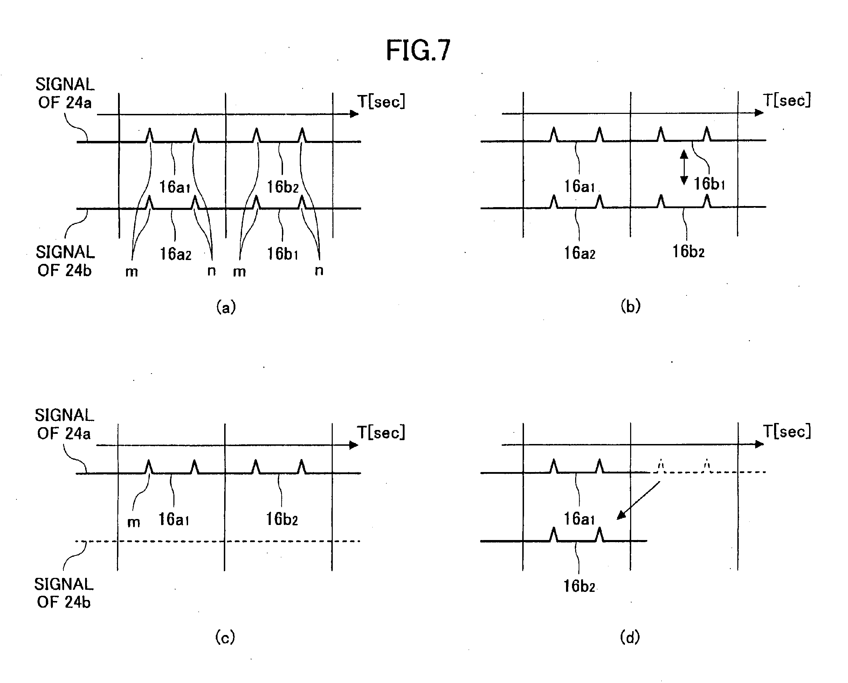

As shown in FIG. 6 (b), the respective applied force sensors 16a₁, 16a₂, 16b₁ and 16b₂ are connected in such a manner that the applied force sensors 16 disposed in the inside circumferential direction and the applied force sensors 16 disposed in the outside circumferential direction are alternately connected with respect to the circumferential direction by the first signal transmitting line 24a and the second signal transmitting line 24b. Accordingly, when the tire 14 rotates in the forward running direction (in the direction of the arrow C of FIG. 6 (a)), the applied force sensors 16a and 16a₂ come into contact with the ground first, and then, the applied force sensors 16b₁ and 16b₂ come into contact with the ground. As a result, the detection signals of the applied force sensors 16a₁ and 16b₂ are transmitted in a time-series manner. Further, the detection signals of the applied force sensors 16a₂ and 16b₁ are transmitted in a time-series manner. The detection signals transmitted at this time are shown in FIG. 7 (a). A top part of FIG. 7 (a) shows a signal of the first signal transmission line 24a and a bottom part of FIG. 7 (a) shows a signal of the second signal transmission line 24b. The same as FIG. 4 (a), by the applied force sensors 16, the landing on detection signals m and the taking off detection signals n are detected. It is noted that FIG. 6 (a) and FIG. 6 (b) through (d) simplify the detection signals including the landing on detection signals m and the taking off detection signals n for the purpose of explanation. The detection signals transmitted in a time-series manner through the wheel speed sensor 22 and the receiving part 26 to the signal identifying part 34, are separated and identified by the signal identifying part 34 with the use of the signal separating period T = L/V calculated by the separating period calculating part 32 based on the wheel speed (rotation speed of the tire 14) V and the disposing interval L of the applied force sensors 16. That is, the detection signals of the respective applied force sensors 16a₁, 16a₂, 16b₁ and 16b₂ are obtained. The thus-separated detection signals of the respective applied force sensors 16a₁, 16a₂, 16b₁ and 16b₂ are provided to the estimating part 36.

The estimating part 36 changes a mode of signal processing between in a case where the signals of the first signal transmission line 24a and the second signal transmission line 24b are obtained satisfactorily and in another case where only any one thereof can be obtained. For example, when the signals of the first signal transmission line 24a and the second signal transmission line 24b are obtained satisfactorily, recombination of the detection signals 16a₁, 16a₂, 16b₁ and 16b₂ is carried out, as shown in FIG. 7 (b). Specifically, the detection signals of the applied force sensor 16b₁ and the applied force sensor 16b₂ are replaced by one another, the detection signals of the applied force sensor 16a₁ and the applied force sensor 16b₁ are connected in a time-series manner, and the detection signals of the applied force sensor 16a₂ and the applied force sensor 16b₂ are connected in a time-series manner.

As a result of carrying out the processing, it is possible to create a state the same as a state where, as if the applied force sensors 16a₁, 16b₁ disposed in the inside circumferential side are connected in series, and the applied force sensors 16a₂, 16b₂ disposed in the outside circumferential side are connected in series. Accordingly, the estimating part 36 can obtain ground contact widths at two positions in the width direction of the tire 14 in detection timing of the applied force sensors 16a₁, 16a₂, to estimate a ground state of the tire 14. Similarly, the estimating part 36 can obtain ground contact widths at two positions in the width direction of the tire 14 in detection timing of the applied force sensors 16b₁, 16b₂, to estimate a ground state of the tire 14. By thus carrying out estimation of ground contacts state at successive two timings, it is possible to carry out estimation of ground contact states with higher resolution than that of the connection way of FIG. 2.

In one hand, a case where the signal identifying part 34 can obtain the detection signal of only one of the first signal transmission line 24a and the second signal transmission line 24b will now be discussed. For example, when the second signal transmission line 24b has a breakage or a transmission error for example, the signal of only the first signal transmission line 24a can be obtained by the signal identifying part 34, as shown in FIG. 7 (c). The signal identifying part 34 separates and identifies the detection signals provided by the first signal transmission line 24a in a time-series manner, based on the signal separating period T = L/V. In this case, a state is substantially the same as a state in which the applied force sensors 16a₁, 16b₂ disposed in the circumferential direction B with being different in position in the with direction A of the tire 14 are connected in series, i.e., a configuration substantially the same as the configuration of FIG. 2. Then, by rearranging into parallel along the width direction A of the tire 14, a state shown in FIG. 7 (d) is obtained. This can be regarded as, as described with reference to FIG. 4, indicating ground contact lengths in the inside circumferential side and the outside circumferential side in the width direction at certain ground contact timing. That is, the same as the case of FIG. 4, it is possible to carry out estimation of a ground contact state of the tire 14 from the detection signals detected by the applied force sensors 16 in the circumferential direction of the tire 14 connected in series. It is noted that, also in a case where the first signal transmission line 24a has a breakage or a transmission error, a ground contact state of the tire 14 can be estimated with the same processing.

Thus, by providing the arrangement and connection of the applied force sensors 16 as shown in FIG. 6, it is possible to carry out estimation of a ground contact state of the tire 14 with a high accuracy when the signals can be properly obtained from the first signal transmission line 24a and the second signal transmission line 24b. Further, when any one has a breakage or a transmission error, a ground contact state can be estimated in the same manner as that of the prior art. That is, it is possible to configure a fail-safe system considering a breakage or a transmission error of the signal transmission lines 24. It is noted that, when the signals of the first signal transmission line 24a and the second transmission line 24b can be obtained properly, the signal of any one may be selected, and estimation of a ground contact state may be carried out with the processing shown in FIG. 7 (b). In this case, it is possible to control a difference in the accuracy caused by a difference of whether or not a breakage or a transmission error occurs.

It is noted that, in the case of FIG. 6, the example where the two lines of the first signal transmission line 24a and the second signal transmission line 24b are provided is shown. However, as long as applied force sensors 16 disposed inside and applied force sensors 16 disposed outside are connected alternatively with respect to the circumferential direction, three or more signal transmission lines may be provided. In this case, it is possible to improve the fail-safe function.

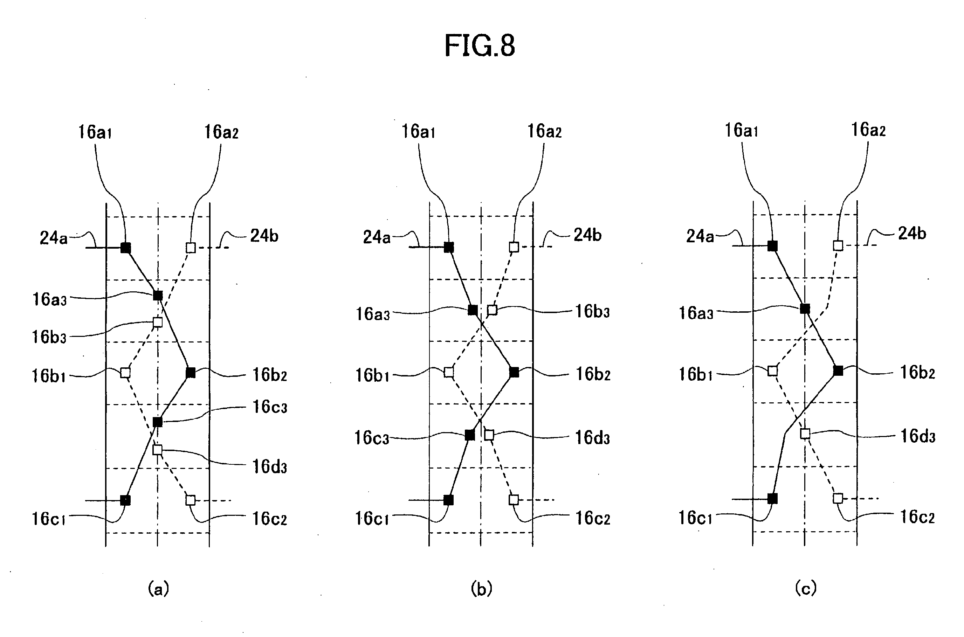

FIG. 8 shows an example in which, when the first signal transmission line 24a and the second signal transmission line 24b shown in FIG. 6 are used, three applied force sensors 16 are disposed in the width direction of the tire 14 the same as FIG. 2. In FIG. 8 (a), applied force sensors 16a₁, 16b₁, 16c₁ are disposed on the inside circumferential side, applied force sensors 16a₂, 16b₂, 16c₃ are disposed on the outside circumferential side and applied force sensors 16a₃, 16b₃, 16c₃, 16d₃ are disposed approximately in the center, of the width direction of the tire 14. The first signal transmission line 24a connects the applied force sensors 16a₁, 16a₃, 16b₂, 16c₃, 16c₁ in sequence in series. Similarly, the second signal transmission line 24a connects the applied force sensors 16a₂, 16b₃, 16b₁, 16d₃, and 16c₂ in sequence in series. The ground contact interval L in the circumferential direction of the applied force sensors 16 connected by the first signal transmission line 24a is, the same as the examples shown in FIG. 2 (a) and FIG. 6 (a), set longer than the standard ground contact length L0 of the tire 14. Further, in FIG. 8 (a), the applied force sensors 16a₃, 16b₃ and the applied force sensors 16c₃, 16d₃ disposed approximately in the center of the tire 14 are disposed with being slightly different in position in the circumferential direction of the tire 14 so that mutual interference is avoided. As described above, when the tire 14 rotates at a medium or high speed, it is possible to substantially ignore a slight difference in position in the circumferential direction. By providing an arrangement and wiring for the applied force sensors 16 the same as the example of FIG. 7 (a), it is possible to configure the tire state estimation system 10 having high accuracy detection and fail-safe functions with the use of the first signal transmission line 24a and the second transmission line 24b the same as the example described with reference to FIG. 6. In this case, respective ground contact lengths in the width direction at certain timing can be estimated based on detection signals detected by the applied force sensors 16a₁, 16a₃, 16b₂ and/or the applied force sensors 16a₂, 16b₃, 16b₁, and estimation of transverse force or a camber angle, and estimation of a ground contact surface shape, at this time, can be carried out. Further, respective ground contact lengths in the width direction in next timing can be estimated based on detection signals detected by the applied force sensors 16b₂, 16c₃, 16c₁ and/or the applied force sensors 16b₁, 16d₃, 16c₂, and estimation of transverse force or a camber angle and estimation of a ground contact surface shape, at this time, can be carried out.

An arrangement of applied force sensors 16 on the inside circumferential side and on the outside circumferential side of the tire 14 of FIG. 8 (b) is the same as that of FIG. 8 (a), and an arrangement of the applied force sensors 16a₃, 16b₃ and the applied force sensors 16c₃, 16d₃, disposed approximately in the center of the tire 14, is different. In the case of FIG. 8 (b), the applied force sensors 16a₃, 16b₃ and the applied force sensors 16c₃, 16d₃ are disposed with being different in position in the width direction of the tire 14 for the purpose of avoiding mutual interference. In this case, detection positions approximately in the center of the tire 14 are slightly different between the first signal transmission line 24a and the second signal transmission line 24b. As a result, a ground contact surface shape of the tire 14 estimated slightly changes. However, since transverse force or a camber angle can be estimated from ground contact lengths on the inside circumferential side and on the outside circumferential side, estimation of transverse force or a camber angle can be carried out approximately the same as FIG. 8 (a). Also in this case, respective ground contact lengths in the width direction at certain timing can be estimated based on detection signals detected by the applied force sensors 16a₁, 16a₃, 16b₂ and/or the applied force sensors 16a₂, 16b₃, 16b₁, and estimation of a ground contact state at this time can be carried out. Further, respective ground contact lengths in the width direction at next timing can be estimated based on detection signals detected by the applied force sensors 16b₂, 16c₃, 16c₁ and/or the applied force sensors 16b₁, 16d₃, 16c₂, and estimation of a ground contact state can be carried out.

An arrangement of applied force sensors 16 on the inside circumferential side and on the outside circumferential side of the tire 14 of FIG. 8 (c) is the same as that of FIG. 8 (a), and, approximately in the center of the tire 14, only applied force sensors 16a₃, 16d₃ are disposed in FIG. 8 (c). The first signal transmission line 24a connects the applied force sensors 16a₁, 16a₃, 16b₂, 16c₁, 16a₃ in series in sequence. Similarly, the second signal transmission line 24b connects the applied force sensors 16a₂, 16b₁, 16d₃, and 16c₂ in series in sequence. In this case, respective ground contact lengths in the width direction at certain timing can be estimated basically based on detection signals detected by the applied force sensors 16a₁, 16a₃, 16b₂ and/or the applied force sensors 16a₂, 16b₁, and estimation of a ground contact state at this time can be carried out. Further, respective ground contact lengths in the width direction at next timing can be estimated basically based on detection signals detected by the applied force sensors 16b₂, 16c₁ and/or the applied force sensors 16b₁, 16d₃, 16c₂, and estimation of a ground contact state at this time can be carried out. By providing the arrangement and wiring of the applied force sensors 16 as mentioned above, it is possible to carry out estimation of a ground contact state of the tire 14 the same as the other configuration with a reduction of the number of the applied force sensors 16. It is noted that, when the detection signals can be satisfactorily transmitted by the first signal transmission line 24a and the second transmission line 24b, the detection signals of the applied force sensors 16a₃, 16d₃ may be shared by the first signal transmission line 24a and the second transmission line 24b. That is, respective ground contact lengths in the width direction at certain timing can be estimated based on detection signals detected by the applied force sensors 16a₁, 16a₃, 16b₂ and/or the applied force sensors 16a₂, 16a₃, 16b₁ and estimation of a ground contact state can be carried out. Further, respective ground contact lengths in the width direction at next timing can be estimated based on detection signals detected by the applied force sensors 16b₂, 16d₃, 16c₁ and/or the applied force sensors 16b₁, 16d₃, 16c₂, and estimation of a ground contact state can be carried out. Further, even when any one of the first signal transmission line 24a and the second transmission line 24b has a breakage or a transmission error, since estimation of a ground contact length carried out with the use of the three applied force sensors 16 in the width direction is carried out at an alternate time, no substantial problem occurs in estimation of a ground contact state.

The arrangements of the applied force sensors 16 shown in FIGS. 2, 6 and 8 are examples. The number of applied force sensors 16 in the width direction A of the tire 14, connected by the single signal transmission line 24, may be determined freely as long as each particular disposing interval L is set larger than the standard ground contact length L0 of the tire 14, and also, the number is equal to or more than two. For example, five applied force sensors 16 may be disposed on the signal transmission line 24 of FIG. 2. In this case, it is possible to estimate the ground contact surface shape shown in FIG. 5 more accurately.

Further, although the example of the distortion sensors used as the applied force sensors 16 for the present embodiment has been described as one example, another type of sensors, for example, acceleration sensors which detect acceleration in a radial direction of the tire, may be used. Also in this case, it is possible to obtain a change in a signal at times of landing on and taking off, and thus it is possible to estimate a ground contact length and estimate a ground contact state of the tire 14 the same as the case of using the distortion sensors.

In the present embodiment, an example in which, in order to estimate a detail ground contact state of the tire 14, the applied force sensors 16 are disposed in the circumferential direction with being different in position in the width direction, has been described. However, the applied force sensors 16 may be disposed only in the circumferential direction of the tire 14 without being different in position in the width direction. For example, when the applied force sensors 16 are disposed only on the inside circumferential side of the tire 14, it is possible to obtain a ground contact length of the inside circumferential side of the tire 14. For example, when the tire 14 is inclined, the ground contact length on the inside circumferential side changes according to the inclination. Then, by comparing the thus-obtained ground contact length with a standard ground contact length previously measured, it is possible to easily estimate an inclination of the tire or such. Further, it is also possible to estimate a change in air pressure of the tire 14 from a change in the ground contact length. It is noted that, when an attitude of the tire 14 is to be easily estimated, it is preferable that the applied force sensors 16 are disposed on the inside circumferential side or on the outside circumferential side of the tire 14. However, when only air pressure is estimated, the applied force sensors 16 may be disposed approximately in the center in the width direction of the tire 14.

## Claims

1. A tire state estimation system (10) comprising :
a plurality of applied force sensors (16,16a,16b,16c,16d); disposed in a circumferential direction of a tire (14), for detecting applied force produced according to a ground contact state of the tire (14);
a signal transmitting means (18,24) configured to connect the plurality of applied force sensors in series, and to transmit detection signals from the applied force sensors in a time-series manner;
a signal identifying means (34) configured to identify the detection signals from the applied force sensors (16) transmitted in the time-series manner as those of the respective applied force sensors, based on a rotation speed of the tire (14) and a disposing interval in the circumferential direction of the applied force sensors (16); and
an estimating means (26) configured to estimate the ground contact state of the tire, based on the detection signals thus identified for the respective applied force sensors (16).

2. The tire state estimation system (10) as claimed in claim 1, wherein:
the plurality of applied force sensors (16) disposed in the circumferential direction of the tire (14) are disposed in such a manner that they are disposed at different positions in a width direction of the tire (14) when they are disposed in the circumferential direction.

3. The tire state estimation system (10) as claimed in claim 1, wherein:
the plurality of applied force sensors (16) disposed in the circumferential direction of the tires (14) are disposed in such a manner that they are disposed at least in an inside circumferential direction and in an outside circumferential circuit with respect to a width direction of the tire (14), and
the signal transmitting means (18,24) forms at least a first signal transmission line (24a) and a second signal transmission line (24b), for connecting alternately with respect to the circumferential direction the applied force sensors (16) disposed inside and the applied force sensors (16) disposed outside.

4. The tire state estimation system (10) as claimed in claim 3, wherein:
said first signal transmission line (24a) and the second signal transmission line (24b) connect the applied force sensors (16) disposed between the applied force sensors (16) disposed inside and the applied force sensors (16) disposed outside.

5. The tire state estimation system (10) as claimed in any one of claims 1-4, wherein:
the plurality of applied force sensors (16) connected in series by the signal transmitting means (18,24) are disposed at an interval in the circumferential direction of the tire (14) equal to or larger than a standard ground contact length of the tire (14).

6. The tire state estimation system (10) as claimed in claim 1, wherein:
the applied force sensors (16) comprise sensors which detect applied force produced according to the ground contact state of the tire (14), and comprise those in at least one type between, distortion sensors which detect distortion in a radial direction of the tire (14) and acceleration sensors which detect acceleration in the radial direction of the tire (14).

7. A tire (14) comprising:
a plurality of applied force sensors (16), disposed in a circumferential direction of a tire (14), for detecting applied force produced according to a ground contact state of the tire; and
a signal transmitting means (18,24) configured to connect the plurality of applied force sensors (16) in series, and to transmit detection signals from the applied force sensors (16) in a time-series manner.

8. The tire (14) as claimed in claim 7, wherein:
the plurality of applied force sensors (16) disposed in the circumferential direction of the tire (14) are disposed in such a manner that they are disposed at different positions in a width direction of the tire (14) when they are disposed in the circumferential direction.

9. The tire (14) as claimed in claim 7, wherein:
the plurality of applied force sensors (16) disposed in the circumferential direction of the tire are disposed in such a manner that they are disposed at least in an inside circumferential direction and in an outside circumferential circuit with respect to a width direction of the tire (14), and
the signal transmitting means (18,24) forms at least a first signal transmission line (24a) and a second signal transmission line (24b), for connecting alternately with respect to the circumferential direction the applied force sensors (16) disposed inside and the applied force sensors (16) disposed outside.

10. The tire (14) as claimed in claim 9, wherein:
said first signals transmission line (24a) and the second signal transmission line (24b) connect the applied force sensors disposed between the applied force sensors disposed inside and the applied force sensors disposed outside.

11. The tire (14) as claimed in any one of claims 7-10, wherein:
the plurality of applied force sensors (16) connected in series by the signal transmitting means (18,24) are disposed at an interval in the circumferential direction of the tire (14) equal to or larger than a standard ground contact length of the tire.

12. The tire (14) as claimed in claim 7, wherein:
the applied force sensors (16) comprise sensors which detect applied force produced according to the ground contact state of the tire (14), and comprise those in at least one type between distortion sensors which detect distortion in a radial direction of the tire (14) and acceleration sensors which detect acceleration in the radial direction of the tire (14).

## Patentansprüche

1. System (10) zur Einschätzung des Reifenzustands, das Folgendes aufweist:
eine Vielzahl von Sensoren (16, 16a, 16b, 16c, 16d) für wirkende Kräfte, die in einer Umfangsrichtung eines Reifens (14) angeordnet sind, um wirkende Kräfte zu erfassen, die in Übereinstimmung mit einem Bodenkontaktzustand des Reifens (14) auftreten;
eine Signalübertragungseinrichtung (18, 24), die dazu aufgebaut ist, die Vielzahl von Sensoren für wirkende Kräfte in Serie zu verbinden und Erfassungssignale von den Sensoren für wirkende Kräfte in einer Weise einer zeitlichen Abfolge zu übertragen;
eine Signalidentifizierungseinrichtung (34), die dazu aufgebaut ist, die Erfassungssignale von den Sensoren (16) für wirkende Kräfte, die in der Weise der zeitlichen Abfolge übertragen werden, als jene der jeweiligen Sensoren für wirkende Kräfte auf der Grundlage einer Drehzahl des Reifens (14) und eines Anordnungsintervalls der Sensoren (16) für wirkende Kräfte in der Umfangsrichtung zu identifizieren; und
eine Abschätzungseinrichtung (26), die dazu aufgebaut ist, den Bodenkontaktzustand des Reifens auf der Grundlage der so identifizierten Erfassungssignale für die jeweiligen Sensoren (16) für wirkende Kräfte abzuschätzen.

2. System (10) zur Einschätzung des Reifenzustands nach Anspruch 1, wobei:
die Vielzahl von Sensoren (16) für wirkende Kräfte, die in der Umfangsrichtung des Reifens (14) angeordnet sind, in einer solchen Weise angeordnet sind, dass sie in unterschiedlichen Positionen in einer Breitenrichtung des Reifens (14) angeordnet sind, während sie in der Umfangsrichtung angeordnet sind.

3. System (10) zur Einschätzung des Reifenzustands nach Anspruch 1, wobei:
die Vielzahl von Sensoren (16) für wirkende Kräfte, die in der Umfangsrichtung des Reifens (14) angeordnet sind, in einer solchen Weise angeordnet sind, dass sie zumindest in einer inneren Umfangsrichtung und in einer äußeren Umfangsrichtung mit Bezug auf eine Breitenrichtung des Reifens (14) angeordnet sind, und
die Signalübertragungseinrichtung (18, 24) mindestens eine erste Signalübertragungsleitung (24a) und eine zweite Signalübertragungsleitung (24b) bildet, um die innen angeordneten Sensoren (16) für wirkende Kräfte und die außen angeordneten Sensoren (16) für wirkende Kräfte abwechselnd mit Bezug auf die Umfangsrichtung zu verbinden.

4. System (10) zur Abschätzung des Reifenzustands nach Anspruch 3, wobei:
die erste Signalübertragungsleitung (24a) und die zweite Signalübertragungsleitung (24b) die Sensoren (16) für wirkende Kräfte verbinden, die zwischen den innen angeordneten Sensoren (16) für wirkende Kräfte und den außen angeordneten Sensoren (16) für wirkende Kräfte angeordnet sind.

5. System (10) zur Abschätzung des Reifenzustands nach einem der Ansprüche 1-4, wobei:
die Vielzahl von Sensoren (16) für wirkende Kräfte, die durch die Signalübertragungseinrichtung (18, 24) in Serie verbunden sind, in der Umfangsrichtung des Reifens (14) in einem Intervall angeordnet sind, das gleich oder größer als eine Standardbodenkontaktlänge des Reifens (14) ist.

6. System (10) zur Abschätzung des Reifenzustands nach Anspruch 1, wobei:
die Sensoren (16) für wirkende Kräfte Sensoren umfassen, welche wirkende Kräfte erfassen, die in Übereinstimmung mit dem Bodenkontaktzustand des Reifens (14) erzeugt werden, und solche aus mindestens einem Typ umfassen, zu dem Verzugssensoren gehören, welche einen Verzug in einer radialen Richtung des Reifens (14) erfassen, und Beschleunigungssensoren, welche Beschleunigung in der radialen Richtung des Reifens (14) erfassen.

7. Ein Reifen (14), der Folgendes aufweist:
eine Vielzahl von Sensoren (16) für wirkende Kräfte, die in einer Umfangsrichtung eines Reifens (14) angeordnet sind, um wirkende Kräfte zu erfassen, die in Übereinstimmung mit einem Bodenkontaktzustand des Reifens erzeugt werden; und
eine Signalübertragungseinrichtung (18, 24), die dazu aufgebaut ist, die Vielzahl von Sensoren (16) für wirkende Kräfte in Serie zu verbinden und Erfassungssignale von den Sensoren (16) für wirkende Kräfte in einer Weise einer zeitlichen Abfolge zu übertragen.

8. Reifen (14) nach Anspruch 7, wobei:
die Vielzahl von Sensoren (16) für wirkende Kräfte, die in der Umfangsrichtung des Reifens (14) angeordnet sind, in einer solchen Weise angeordnet sind, dass sie in einer Breitenrichtung des Reifens (14) an unterschiedlichen Positionen angeordnet sind, wenn sie in der Umfangsrichtung angeordnet sind.

9. Reifen (14) nach Anspruch 7, wobei:
die Vielzahl von Sensoren (16) für wirkende Kräfte, die in der Umfangsrichtung des Reifens angeordnet sind, in einer solchen Weise angeordnet sind, dass sie zumindest in einer inneren Umfangsrichtung und in einer äußeren Umfangsrichtung mit Bezug auf eine Breitenrichtung des Reifens (14) angeordnet sind, und
die Signalübertragungseinrichtung (18, 24) mindestens eine erste Signalübertragungsleitung (24a) und eine zweite Signalübertragungsleitung (24b) bildet, um abwechselnd die innen angeordneten Sensoren (16) für wirkende Kräfte und die außen angeordneten Sensoren (16) für wirkende Kräfte mit Bezug auf die Umfangsrichtung zu verbinden.

10. Reifen (14) nach Anspruch 9, wobei:
die erste Signalübertragungsleitung (24a) und die zweite Signalübertragungsleitung (24b) die Sensoren für wirkende Kräfte verbinden, die zwischen den innen angeordneten Sensoren für wirkende Kräfte und den außen angeordneten Sensoren für wirkende Kräfte angeordnet sind.

11. Reifen (13) nach einem der Ansprüche 7-10, wobei:
die Vielzahl von Sensoren (26) für wirkende Kräfte, die durch die Signalübertragungseinrichtung (18, 24) in Serie verbunden sind, in der Umfangsrichtung des Reifens (14) in einem Intervall angeordnet sind, das gleich oder größer als eine Standardbodenkontaktlänge des Reifens ist.

12. Reifen (14) nach Anspruch 7, wobei:
die Sensoren (16) für wirkende Kräfte Sensoren umfassen, die wirkende Kräfte erfassen, die in Übereinstimmung mit dem Bodenkontaktzustand des Reifens (14) erzeugt werden, und solche aus mindestens einem Typ umfassen, zu dem Verzugssensoren gehören, welche einen Verzug in einer radialen Richtung des Reifens (14) erfassen, und Beschleunigungssensoren, welche eine Beschleunigung in der radialen Richtung des Reifens (14) erfassen.

## Revendications

1. Système (10) d'estimation de l'état d'un pneu, comprenant :
une pluralité de capteurs (16, 16a, 16b, 16c, 16d) de force appliquée, que l'on dispose dans une direction circonférentielle d'un pneu (14), afin de détecter une force appliquée produite selon un état de contact du pneu (14) avec le sol;
un moyen (18, 24) de transmission de signaux configuré pour connecter en série la pluralité de capteurs de force appliquée, et pour transmettre des signaux de détection depuis les capteurs de force appliquée de manière chronologique;
un moyen (34) d'identification de signaux configuré pour identifier les signaux de détection provenant des capteurs (16) de force appliquée transmis de manière chronologique comme étant ceux des capteurs de force appliquée respectifs, sur la base d'une vitesse de rotation du pneu (14) et un intervalle de disposition dans la direction circonférentielle des capteurs (16) de force appliquée;
et
un moyen d'estimation (26) configuré pour estimer l'état de contact du pneu avec le sol, sur la base des signaux de détection ainsi identifiés pour les capteurs (16) de force appliquée respectifs.

2. Système (10) d'estimation de l'état d'un pneu selon la revendication 1, dans lequel :
la pluralité de capteurs (16) de force appliquée que l'on dispose dans la direction circonférentielle du pneu (14) sont disposés de manière à être agencés au niveau de positions différentes dans une direction de largeur du pneu (14) lorsqu'ils sont disposés dans la direction circonférentielle.

3. Système (10) d'estimation de l'état d'un pneu selon la revendication 1, dans lequel
la pluralité de capteurs (16) de force appliquée que l'on dispose dans la direction circonférentielle du pneu (14) sont disposés de manière à être agencés au moins dans une direction circonférentielle interne et dans circuit circonférentiel externe par rapport à une direction de largeur du pneu (14), et
le moyen (18, 24) de transmission de signaux forme au moins une première ligne (24a) de transmission de signaux et une deuxième ligne (24b) de transmission de signaux, pour une connexion alternée par rapport à la direction circonférentielle des capteurs (16) de force appliquée disposés à l'intérieur et des capteurs (16) de force appliquée disposés à l'extérieur.

4. Système (10) d'estimation de l'état d'un pneu selon la revendication 3, dans lequel
ladite première ligne (24a) de transmission de signaux et la deuxième ligne (24b) de transmission de signaux connectent les capteurs (16) de force appliquée disposés entre les capteurs (16) de force appliquée disposés à l'intérieur et les capteurs (16) de force appliquée disposés à l'extérieur.

5. Système (10) d'estimation de l'état d'un pneu selon l'une quelconque des revendications 1-4, dans lequel :
la pluralité de capteurs (16) de force appliquée connectés en série par le moyen (18, 24) de transmission de signaux sont disposés à un intervalle dans la direction circonférentielle du pneu (14) supérieur ou égal à une longueur de contact standard du pneu (14) avec le sol.

6. Système (10) d'estimation de l'état d'un pneu selon la revendication 1, dans lequel :
les capteurs (16) de force appliquée comprennent des capteurs qui détectent une force appliquée produite selon l'état de contact du pneu avec le sol (14), et comprennent des capteurs dans au moins un type entre des capteurs de distorsion qui détectent la distorsion dans une direction radiale du pneu (14) et des capteurs d'accélération qui détectent l'accélération dans la direction radiale du pneu (14).

7. Pneu (14) comprenant :
une pluralité de capteurs (16) de force appliquée, disposés dans une direction circonférentielle du pneu (14), pour détecter une force appliquée produite selon un état de contact du pneu avec le sol; et
un moyen (18, 24) de transmission de signaux configuré pour connecter en série la pluralité de capteurs (16) de force appliquée, et pour transmettre des signaux de détection depuis les capteurs (16) de force appliquée de manière chronologique.

8. Pneu (14) tel que revendiqué dans la revendication 7, dans lequel :
la pluralité de capteurs (16) de force appliquée disposés dans la direction circonférentielle du pneu (14) sont disposés de manière à être agencés au niveau de positions différentes dans une direction de largeur du pneu (14) lorsqu'ils sont disposés dans la direction circonférentielle.

9. Pneu (14) tel que revendiqué dans la revendication 7, dans lequel :
la pluralité de capteurs (16) de force appliquée disposés dans la direction circonférentielle du pneu sont disposés de manière à être agencés au moins dans une direction circonférentielle interne et dans un circuit circonférentiel externe par rapport à une direction de largeur du pneu (14), et
le moyen (18, 24) de transmission de signaux forme au moins une première ligne (24a) de transmission de signaux et une deuxième ligne (24b) de transmission de signaux, pour une connexion alternée par rapport à la direction circonférentielle des capteurs (16) de force appliquée disposés à l'intérieur et des capteurs (16) de force appliquée disposés à l'extérieur.

10. Pneu (14) selon la revendication 9, dans lequel :
ladite première ligne (24a) de transmission de signaux et la deuxième ligne (24b) de transmission de signaux connectent les capteurs de force appliquée disposés entre les capteurs de force appliquée disposés à l'intérieur et les capteurs de force appliquée disposés à l'extérieur.

11. Pneu (14) selon l'une quelconque des revendications 7-10, dans lequel :
la pluralité de capteurs (16) de force appliquée connectés en série par le moyen (18, 24) de transmission de signaux sont disposés à un intervalle dans la direction circonférentielle du pneu (14) supérieur ou égal a une longueur de contact standard du pneu avec le sol.

12. Pneu (14) selon la revendication 7, dans lequel :
les capteurs (16) de force appliquée comprennent des capteurs qui détectent une force appliquée produite selon l'état de contact du pneu avec le sol (14), et comprennent des capteurs dans au moins un type entre des capteurs de distorsion qui détectent une distorsion dans une direction radiale du pneu (14) et des capteurs d'accélération qui détectent l'accélération dans la direction radiale du pneu (14).
